# EUROPÄISCHE PATENTSCHRIFT

(11) **EP 1 963 709 B1**
(45) Veröffentlichungstag und Bekanntmachung des Hinweises auf die Patenterteilung: **19.06.2013**
(21) Anmeldenummer: 06829870.2
(22) Anmeldetag: 22.12.2006
(51) Int. Cl.: F16G 13/16

(54) **KETTENGLIED MIT EINER MEHRACHSIGEN GELENKVERBINDUNG**
CHAIN LINK HAVING A MULTI-AXIS LINK JOINT
ELEMENT DE CHAINE DOTE D'UNE LIAISON ARTICULEE MULTI-AXE

(30) Priorität: 23.12.2005 DE 102005061777
(43) Veröffentlichungstag der Anmeldung: 03.09.2008
(73) Patentinhaber: Tsubaki Kabelschlepp GmbH, 57482 Wenden-Gerlingen (DE)
(72) Erfinder: KEMPER, Uwe, 57223 Kreuztal (DE); SAMEN, Heiner, 51709 Marienheide (DE)
(74) Vertreter: Neumann, Ditmar
(86) Internationale Anmeldenummer: PCT/EP2006/012503
(87) Internationale Veröffentlichungsnummer: WO 2007/076986

(56) Entgegenhaltungen:
- DE-A1-102004 017 742

## Beschreibung

Der Gegenstand der Erfindung bezieht sich auf ein Kettenglied für eine Energieführungskette zum Führen von Leitungen, Schläuchen, oder dergleichen.

Energieführungsketten werden dann eingesetzt, wenn ein bewegliches Bauteil, insbesondere ein Bauteil, welches sich im Wesentlichen auf einer vorbestimmten Bahn bewegt, mit Verbrauchsmitteln, wie beispielsweise mit Strom, Wasser oder ähnlichem Versorgt werden muss. In solchen Fällen müssen Leitungen, Schläuche oder dergleichen von einem ortsfesten Anschlusspunkt zu einem beweglichen Anschlusspunkt so geführt werden, dass eine Bewegung des Bauteils auf dessen vorbestimmte Bewegungsbahn ermöglicht wird, ohne dass es hierbei zu Beschädigungen der Leitungen kommt.

Es sind unterschiedliche Ausführungsformen einer Energieführungskette bekannt. Eine Energieführungskette ist gebildet durch gelenkig miteinander verbundenen Kettenglieder wobei die Energieführungskette entlang einer vorbestimmten Bahn bewegt wird. Die Kettenglieder bilden einen Kanal, in dem die Leitungen, Schläuche oder dergleichen verlegt sind.

Ein Kettenglied weist wenigstens einen Quersteg und zwei beabstandet zueinander angeordnete Laschen auf. Die Laschen sind so ausgebildet, dass sie mit den Laschen eines benachbarten Kettengliedes gelenkig miteinander verbindbar sind. Die Laschen des Kettengliedes sind über wenigstens einen Quersteg gelenkig verbunden. Die Verbindung zwischen dem Quersteg und den Laschen ist dabei so ausgebildet, dass der Quersteg lösbar mit wenigstens einer Kettenlasche verbunden ist, so dass der Zugang zu den Leitungen in den Führungskanal bzw. in das Kettenglied ermöglicht wird, so dass ein Einlegen oder Herausnehmen der Leitungen sowie ein eventueller Zugang zu den Leitungen zu Wartungszwecken leicht möglich ist. Hierzu wird die Verbindung des Querstegs mit einer Lasche gelöst und der Quersteg an der anderen Lasche ausgelenkt.

Zur Ausbildung einer lösbaren Verbindung zwischen einem Quersteg und der Lasche sind aus dem Stand der Technik verschiedene Möglichkeiten bekannt. Durch die WO 00/63586 ist beispielsweise eine Rastverbindung zwischen Quersteg und Lasche bekannt, die ohne Einsatz von Werkzeugen per Hand lösbar ist.

Die WO 98/34040 A1 beschreibt eine Energieführungskette, bei der der Quersteg Endabschnitte zur Verbindung des Querstegs mit der Kettenlasche aufweist, die ein Verschwenken des Querstegs um Schwenkachsen in beiden Endabschnitten ermöglicht.

Darüber hinaus ist aus der US 4,807,432 eine Energieführungskette bekannt, bei der jeweils ein Quersteg per Kettenglied lösbar mit den Kettenlaschen verbunden ist. Hierbei wird die Verbindung der beiden Kettenlaschen durch Rastnasen vermittelt, die jeweils an den Querstegen ausgebildet sind. Hiervon ausgehend liegt der vorliegenden Erfindung die Aufgabe zugrunde ein Kettenglied anzugeben, bei dem die Verschwenkbarkeit des Querstegs verbessert wird.

DE 10 2004 017 742 offenbart alle Merkmale des Oberbegriffs des Anspruchs 1.

Diese Aufgabe wird erfindungsgemäß durch ein Kettenglied mit den Merkmalen des Anspruchs 1 gelöst. Vorteilhafte Weiterbildungen und Ausgestaltungen des erfindungsgemäßen Kettengliedes sind Gegenstand der abhängigen Ansprüche.

Das erfindungsgemäße Kettenglied für eine Energieführungskette zum Führen von Leitungen, Schläuchen oder dergleichen zwischen einem Ortsfesten und einem beweglichen Anschlusspunkt weist wenigstens einen Quersteg und zwei beabstandet zueinander angeordnete Laschen auf. Der Quersteg ist lösbar und gelenkig mit wenigstens einer Lasche verbunden. Bei der Gelenkverbindung handelt es sich bei der erfindungsgemäßen Ausbildung des Kettengliedes um eine mehrachsige Verbindung.

Durch diese erfindungsgemäße Ausbildung des Kettengliedes wird die Verschwenkbarkeit des Querstegs verbessert. Durch die mehrachsige Gelenkverbindung kann der Quersteg innerhalb der möglichen Verschwenkwinkel innerhalb des Raumes unterschiedliche Positionen einnehmen. Dies ist insbesondere dann von Bedeutung, wenn im begrenzten Einbauraum die Gefahr besteht, dass zum Einlegen oder Herausnehmen von Leitungen die Belastung auf die Gelenkverbindung zu groß wird, so dass es zu einer Beschädigung eines Gliedes kommen kann, wie dies bei den Kettengliedern bei dem Stand der Technik der fall sein kann.

Konstruktiv wird die mehrachsige Gelenkverbindung dadurch erreicht werden, dass diese als eine Kugelgelenkverbindung ausgebildet ist. Eine solche Gelenkverbindung ermöglicht ein leichtes Aufklappen des Querstegs. Andererseits ist die vorzugsweise lösbare Kugelverbindung so ausgebildet, dass diese mit einer Mindestkraft gelöst wird, so dass ein fester Halt erreicht wird, um auch beispielsweise bei Hydraulikschläuchen, die in der Energieführungskette geführt werden, ein Öffnen der Kettenglieder zu vermeiden.

Der wenigstens eine Quersteg hat wenigstens einen Kugelkopf und die wenigstens eine Lasche hat, wenigstens eine korrespondierende Gelenkpfanne aufweist. Alternativ oder zusätzlich kann das Kettenglied so ausgebildet sein, dass wenigstens eine Lasche wenigstens einen Kugelkopf und der wenigstens eine Quersteg wenigstens eine korrespondierende Gelenkpfanne aufweist.

Der Kugelkopf oder/und die Gelenkpfanne ist bzw. sind an wenigstens einem Endbereich des Querstegs ausgebildet.

Die Gelenkpfanne und/oder der Kugelkopf sind an den gegenüberliegenden Endbereichen des Querstegs vorgesehen. Sie liegen vorzugoweise auf einer gedachten

Geraden, welche im Wesentlichen parallel zur Längsachse verläuft.. Dies ist nicht zwingend notwendig. Die Gelenkpfanne und/oder der Kugelkopf können auch versetzt zueinander an den gegenüberliegende Bereichen angeordnet sein, so dass eine gedachte Verbindungsgerade eine Längsachse unter einem Winkel schneidet. Durch die versetzte Anordnung des Kugelkopfes und/oder einer Gelenkpfanne an den gegenüberliegenden Endbereichen des Querstegs kann die Variationsvielfalt der Positionen, die der Quersteg im geöffneten Zustand einnehmen kann, noch weiter erhöht werden. So kann beispielsweise der Quersteg auch im Wesentlichen in Längsrichtung des Kettengliedes verschwenkt werden.

Um einen sicheren Halt des Querstegs an den Seitenlaschen zu ermöglichen wird gemäß einer noch weiteren vorteilhaften Ausgestaltung des Kettengliedes vorgeschlagen, dass die Lasche eine Aufnahme aufweist, welche teilweise einen Handbereich des Querstegs umgreift. Der Quersteg bildet mit wenigstens einer Lasche eine formschlüssige Verbindung, die gegebenenfalls durch Kraftschluss noch weiter unterstützt werden kann.

Das erfindungsgemäße Kettenglied besteht vorzugsweise wenigstens teilweise aus einem Kunststoff.

Der Quersteg kann eine Breite aufweisen, die im Wesentlichen der Länge des Kettengliedes entspricht, so dass der Quersteg einen Deckel bildet. Weitere Vorteile und Einzelheiten des erfindungsgemäßen Kettengliedes werden anhand der in der Zeichnung dargestellten Aufführungsbeispiele erläutert, ohne dass der Gegenstand der Erfindung auf diese konkreten Ausführungsbeispiele beschränkt wird.

Es zeigen:
- Fig. 1: ein erstes Ausführungsbeispiel eines Kettengliedes in einer Draufsicht,
- Fig. 2: einen Quersteg des Kettengliedes nach Fig. 1 in einer Draufsicht,
- Fig. 3: den Quersteg in einer Ansicht von unten,
- Fig. 4: das Kettenglied nach Fig. 1 in einer Draufsicht ohne Quersteg
- Fig. 5: das Kettenglied in einer Ansicht A-A nach Fig. 4
- Fig. 6, 7 und 8: einen Öffnungsvorgang zum Lösen des Querstegs,
- Fig. 9: ein Kettenglied mit teilweise geöffneten Quersteg,
- Fig. 10: ein Kettenglied mit vollständig geöffneten Quersteg,
- Fig. 11: ein zweites Ausführungsbeispiel eines Kettengliedes in einer Draufsicht,
- Fig. 12: einen Quersteg eines Kettengliedes nach Fig. 11 in einer Draufsicht,
- Fig. 13: das Kettenglied nach Fig. 11 jedoch ohne Quersteg in einer Draufsicht,
- Fig. 14: das Kettenglied nach Fig. 11 in einer Seitenansicht und im Teilschnitt,
- Fig. 15: das Kettenglied nach Fig. 11 in einer Seitenansicht im Teilschnitt mit teilweise gelösten Quersteg,
und
- Fig. 16: das Kettenglied nach Fig. 11 in einer Vorderansicht mit geöffnetem Quersteg.

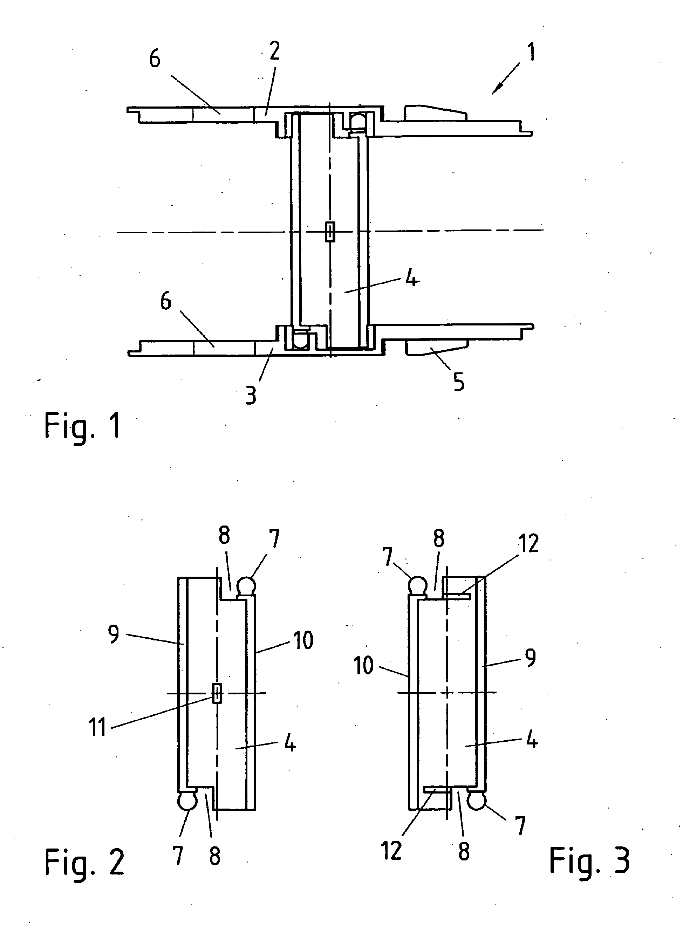

In den Figuren 1 bis 10 ist ein erstes Ausführungsbeispiel eines erfindungsgemäßen Kettengliedes 1 für eine Energieführungskette zum Führen von Leitungen, Schläuchen oder dergleichen zwischen einem Ortsfesten und einem beweglichen Anschlusspunkt dargestellt. Das Kettenglied 1 weist Laschen 2, 3 auf. Die Laschen 2, 3 sind beabstandet zueinander angeordnet. Mit den Laschen 2, 3 ist ein Quersteg 4 lösbar und gelenkig verbunden. Jede Lasche 2, 3 weist an dem einen Endbereich einen Gelenkbolzen auf. In dem gegenüberliegenden Endbereich jeder Lasche 2, 3 ist jeweils eine Gelenkaufnahme 6 ausgebildet. Die Gelenkbolzen 5 und die Gelenkaufnahmen 6 sind so ausgebildet, dass Kettenglieder gelenkig miteinander verbindbar sind.

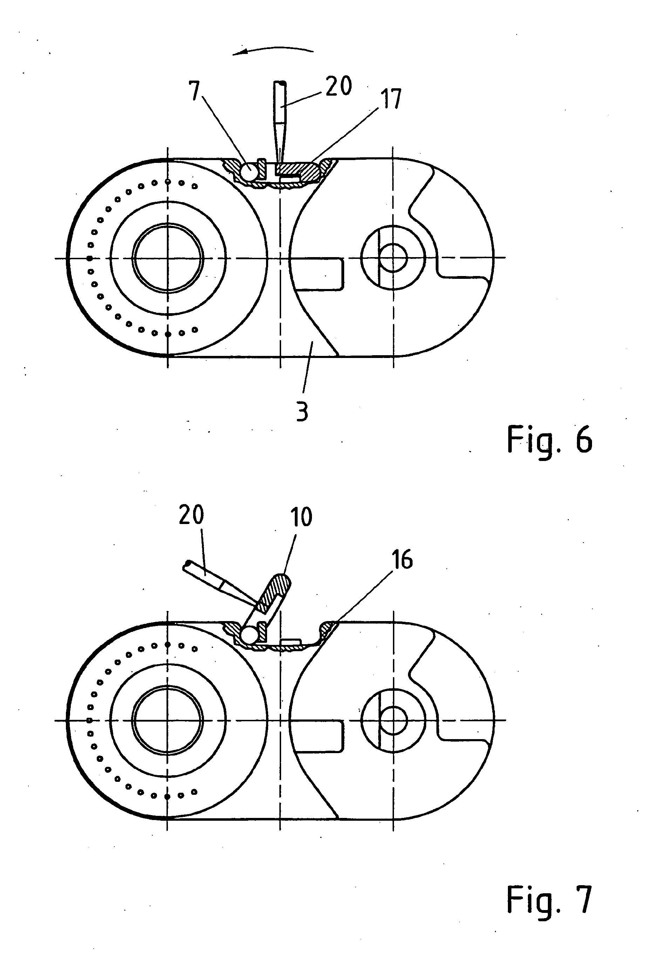

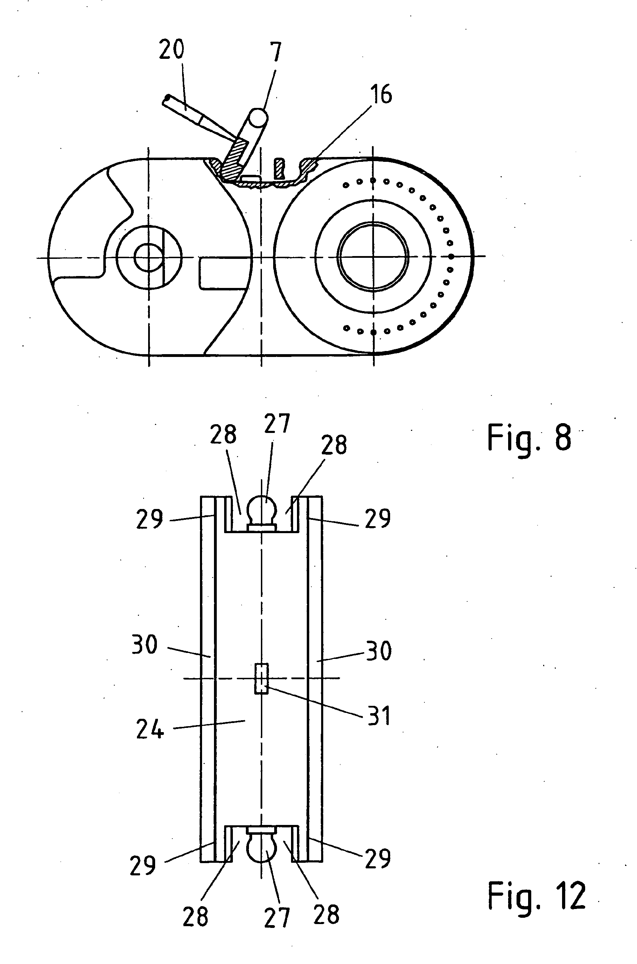

Der Quersteg 4 weist an den gegenüberliegenden Endbereichen jeweils einen Kugelkopf 7 auf. In dem dargestellten Ausführungsbeispiel sind die Kugelköpfe 7 diametral zueinander angeordnet. Zwischen dem Kugelkopf 7 und dem benachbarten Bereich des Querstegs ist ein Spalt 8 ausgebildet. Die Längsränder 9, 10 des Querstegs 4 sind gerundet ausgebildet, wie dies beispielsweise aus der Fig. 7 bzw. 8 ersichtlich ist.

Auf der Oberseite des Querstegs 4 ist ein Werkzeugeingriffsbereich 11 ausgebildet. Dieser Werkzeugeingriffsbereich ist in dem dargestellten Ausführungsbeispiel schlitzförmig gehalten, so dass beispielsweise ein Schraubendreher in diesen Werkzeugeingriffsbereich 11 einbringbar ist.

An der Unterseite des Querstegs 4 ist in dem jeweiligen Endbereich jeweils ein Schlitz 12 vorgesehen, der sich im Wesentlichen quer zur Längsrichtung des Querstegs 4 erstreckt.

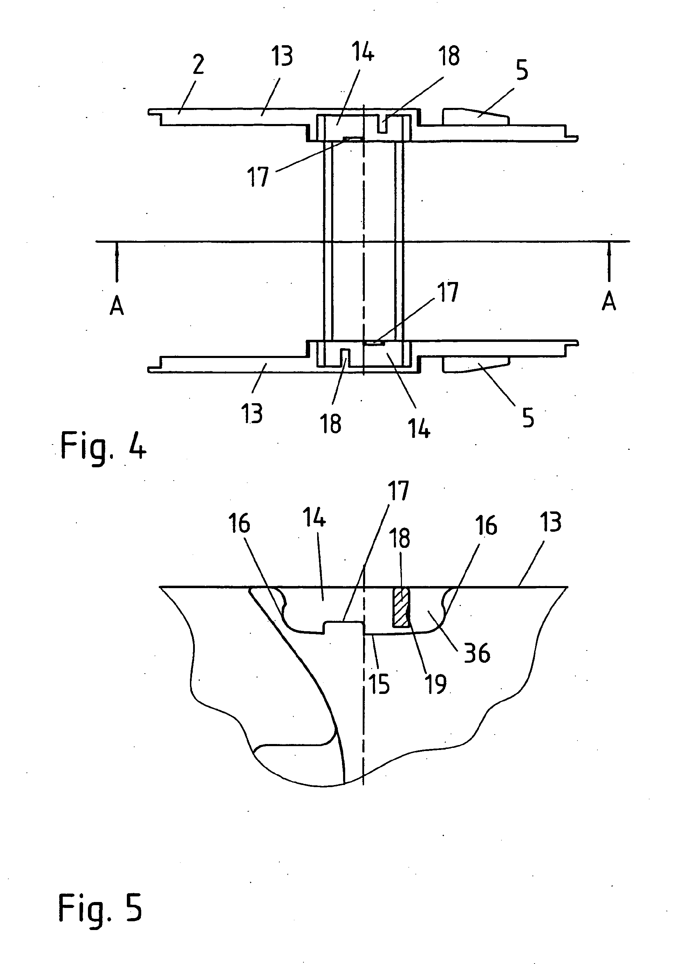

Figuren 4 und 5 zeigen das Kettenglied nach Fig. 1 jedoch ohne des Querstegs 4. Jede Lasche 2, 3 weist einen Längsrand 13 auf. Im Längsrand 13 und in Richtung des gegenüberliegenden Längsrandes einer Lasche ist eine Ausnehmung 14 ausgebildet, die zur Aufnahme eines Endbereichs des Querstegs 4 dient. Die Ausnehmung 14 weist einen Boden 15 und Seitenwände 16 auf. Vom Boden 15 aus und im Wesentlichen orthogonal zu diesen ist ein Vorsprung 17 ausgebildet. Der Vorsprung 17 ist so geformt und angeordnet, dass dieser in den Schlitz 12 des Querstegs 4 hineinragt, wenn der Quersteg 4 mit den Laschen 2, 3 verbunden ist. Die Paarung Vorsprung 17 und Schlitz 12 ist vorzugsweise so ausgebildet, dass diese die quer zur Längsrichtung des Kettengliedes auftretenden Kräfte wenigstens teilweise aufnehmen, so dass eine Quersicherung des Kettengliedes erreicht wird.

Die Seitenwände 16 weisen eine Kontur auf, die an die Längsränder 9, 10 des Querstegs 4 angepasst sind. Vorzugsweise sind die Längsränder 9, 10 so gerundet, dass deren Krümmungsradius im Wesentlichen dem Radius des Kugelkopfes 7 entspricht. Um zu erreichen, dass der Quersteg lediglich unter Aufwendung einer vorbestimmten Kraft aus der Ausnehmung 14 herausnehmbar ist, sind die Seitenwände 16 mit Hinterschnitt versehen, so dass eine Mindestkraft notwendig ist, um den Quersteg 4 von den Laschen 2, 3 zu Lösen.

Aus der Darstellung nach Fig. 4 bzw. 5 ist ersichtlich, dass im Bereich der Ausnehmung 14 eine Zunge 18 vorgesehen ist, die zwischen den Seitenwänden 16 und mit Abstand zum Boden 15 angeordnet ist, so dass die Zunge 18 eine gewisse Elastizität aufweist. Der Abstand der Zunge 18 zur Seitenwand 16 ist so gewählt, dass in diesen Zwischenraum der Kugelkopf 7 einbringbar ist, so dass der Kugelkopf 7 an der Seitenwand 16 und der Zunge 18 anliegt. In dem dargestellten Ausführungsbeispiel weist die Zunge 18 eine Kalotte 19 auf, in die der Kugelkopf 7 teilweise hineinragt. Die Zunge 18 und die benachbarte Seitenwand 16 bilden eine Gelenkpfanne 36. Zum Einbringen des Kugelkopfes zwischen die Zunge 18 und die Seitenwand 16 ist eine gewisse Kraft erforderlich, mittels der die Zunge 18 ausgelenkt wird, bis der Kugelkopf 7 die Kalotte 19 erreicht. Es kann eine kraft-und/oder formschlüssige Verbindung zwischen dem Kugelkopf 7 und der Zunge 18 und der Seitenwand 16 ausgebildet sein.

Zum Lösen des Querstegs 4 von den Laschen 2, 3 wird ein Werkzeug 20 in den Werkzeugeingriffsbereich 11 des Querstegs 4 eingebracht, wie dies aus der Fig. 6 bzw. 7 oder 8 ersichtlich ist. Durch Verschwenken des Werkzeugs wird auf den Quersteg ein Drehmoment ausgeübt, welches hinreichend groß ist, um zu erreichen, dass der Quersteg 4 aus der Ausnehmung 14 gelöst wird. Aus der Fig. 6 und 7 ist ersichtlich, dass der Quersteg von der Lasche 3 dadurch gelöst wird, dass der Längsrand 10 über die Hinterschneidung in der Seitenwand 16 hinaus gedreht wird.

Die Konstruktion des Kettengliedes und die Ausgestaltung der Ausnehmungen und der Querstege sind so gewählt, dass der Quersteg unabhängig davon, ob das Werkzeug 20 im Uhrzeigersinn oder gegen den Uhrzeigersinn verschwenkt wird, der Quersteg 4 aus der Ausnehmung 14 herausschwenkbar ist.

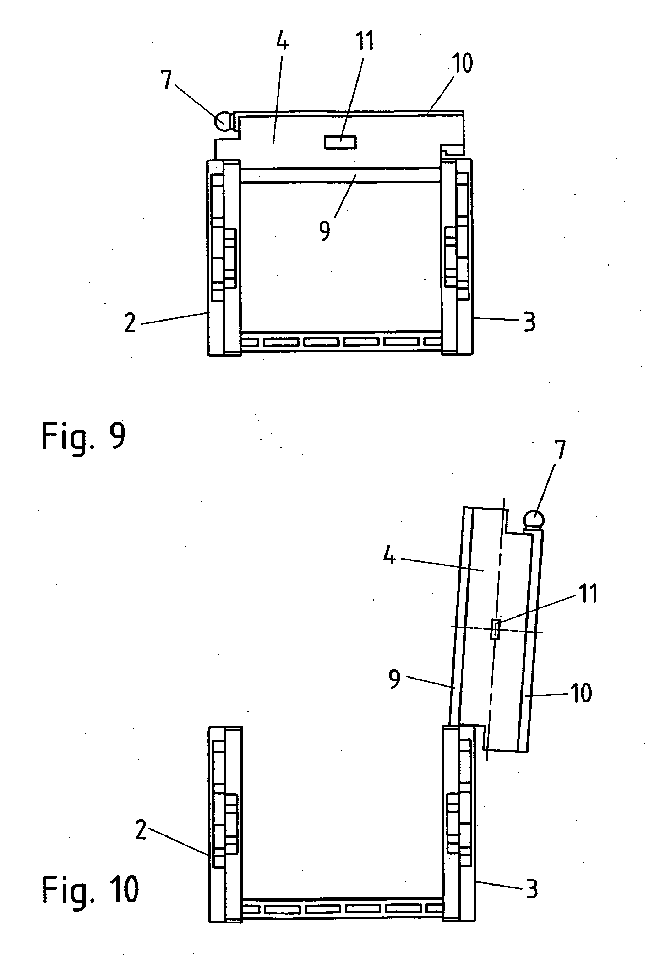

Die Fig. 9 zeigt den Quersteg 4 im teilweise gelösten Zustand und verschwenkt, wobei einer der Kugelköpfe noch in der Ausnehmung festgelegt ist. Die Seitenwand 16 und die Zunge 18 bilden eine Kugelpfanne, in der der Kugelkopf 7 gelagert ist, so dass eine mehrachsige Verschwenkbarkeit des Querstegs 4 ermöglicht wird, wie dies aus der Fig. 10 ersichtlich ist.

Wird auf den Quersteg 4 im geöffneten Zustand eine Kraft ausgeübt, so führt diese unter Umständen zu einem vollständigen Lösen des Querstegs von der Lasche 3, ohne dass die Lasche und/oder der Quersteg teilweise zerstört wird, wie dies bei den bekannten Kettengliedern gegebenenfalls der Fall ist.

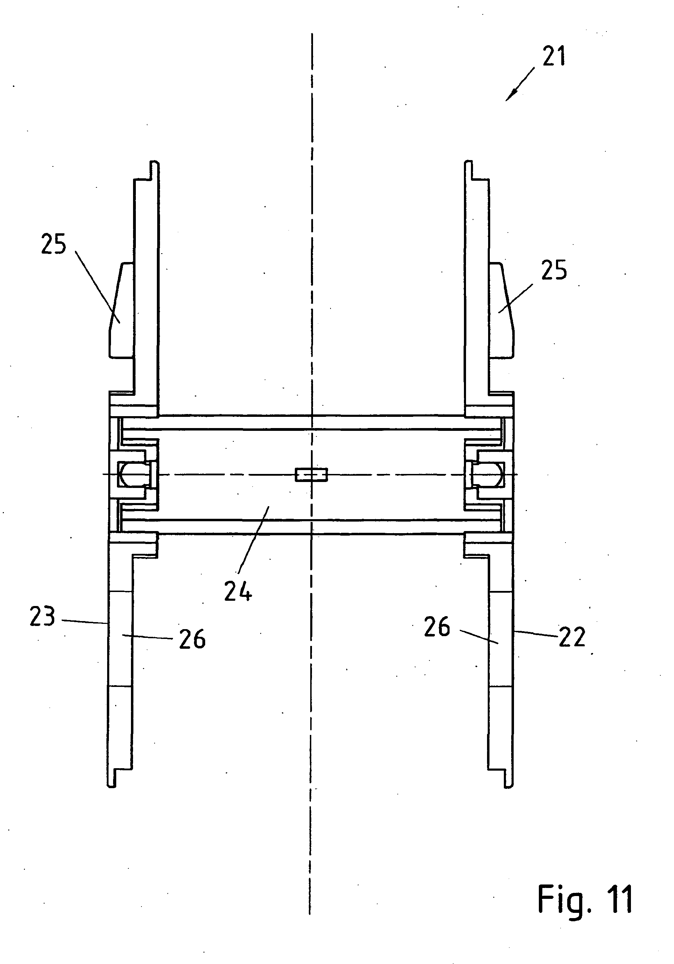

Fig. 11 bis 16 zeigen eine zweite Ausführungsform eines erfindungsgemäßen Kettengliedes für eine Energieführungskette zum Führen von Leitungen, Schläuchen oder dergleichen zwischen einem ortsfesten und einem beweglichen Anschluss. Das Kettenglied 21, wie es in der Fig.11 dargestellt ist, weist eine Lasche 22 und eine zweite Lasche 23 auf. Jede Lasche, 22, 23 weist in dem dargestellten Ausführungsbeispiel jeweils einen Gelenkbolzen 25 auf, der in eine entsprechende Gelenkaufnahme 26 eines benachbarten Kettengliedes einbringbar ist. Die Laschen 22, 23 sind beabstandet zueinander angeordnet und durch einen Quersteg 24 miteinander verbunden. Der Quersteg 24 ist in der Fig. 12 dargestellt. Dieser weist an seinen Endbereichen jeweils einen Kugelkopf 27 auf. Der Quersteg 24 ist symmetrisch bezüglich einer Querachse ausgebildet. Beidseits des Gelenkkopfes ist jeweils ein Spalt 28 vorgesehen, der durch den Gelenkkopf 27 und Fortsätze 29 der Längsränder 30 des Querstegs 24 begrenzt wird. Die Längsränder 30 sind vorzugsweise gerundet ausgebildet. Im zentralen Bereich des Querstegs 24 ist ein Werkzeugeingriffsbereich 31 ausgebildet, welcher zur Aufnahme eines Werkzeugs, beispielsweise eines Schraubendrehers vorgesehen ist.

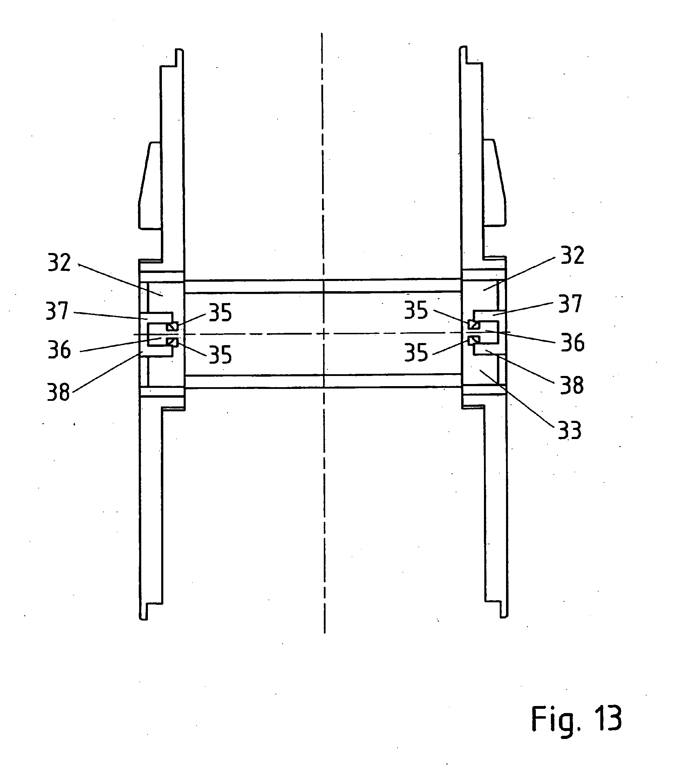

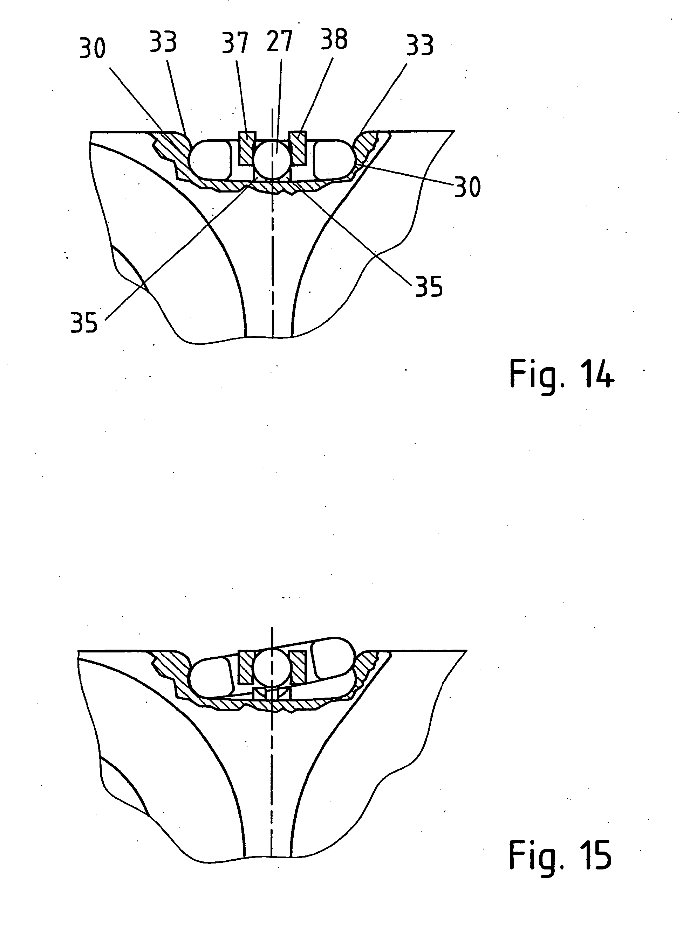

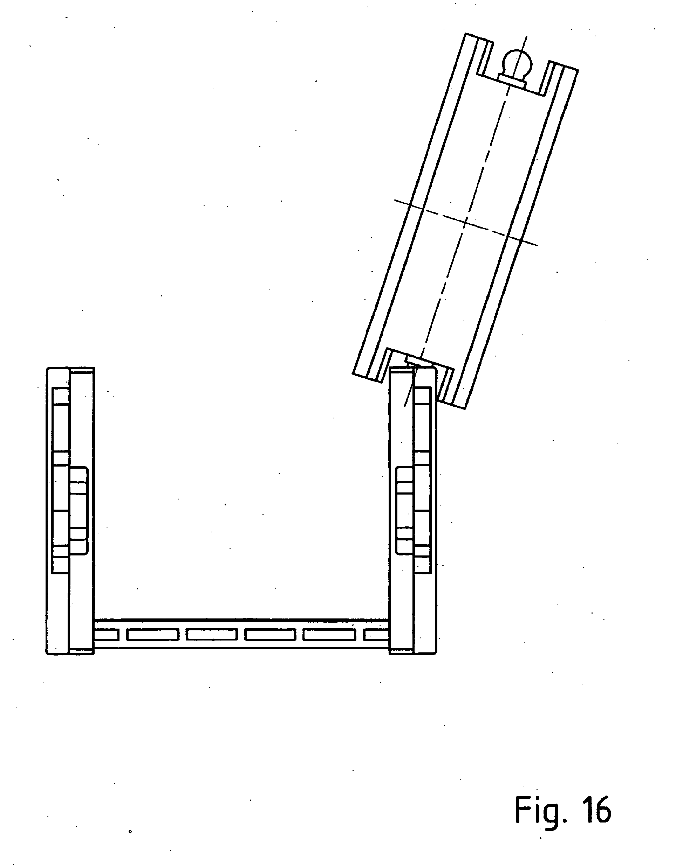

Fig. 14 zeigt das Kettenglied nach Fig. 11 jedoch ohne des Querstegs 24. Aus der Darstellung der Fig. 13 ist ersichtlich, dass jede Lasche 22, 23 eine Aufnahme 32 zur Aufnahme des jeweiligen Endbereichs des Querstegs 24 aufweist. Die Aufnahme 32 ist begrenzt durch Seitenwände 33 und eine Bodenwand 34. Von der Bodenwand 34 erstrecken sich über einen Teil der Tiefe der Aufnahme 32 Erhebungen 35, die zur Anlage an einen Kugelkopf 27 bringbar sind. Eine Gelenkpfanne 36 ist begrenzt durch die Vorsprünge 37, 38. Fig. 14 zeigt eine Lasche 22 mit einem Quersteg 24 im Teilschnitt. Aus der Darstellung ist ersichtlich, dass die Seitenwände 33 mit Hinterschnitten ausgebildet sind, welche teilweise die Längsränder 30 des Querstegs 24 umgreifen. Der Kugelkopf 27 ist zwischen den Vorsprüngen 37, 38 angeordnet. Er liegt auf den Erhebungen 35 auf. Die Erhebungen 35 greifen hinter den Gelenkkopf 27 ein, so dass die Erhebungen 35 mit den Vorsprüngen 37, 38 eine Sicherung gegen ein Lösen des Querstegs quer zur Längsrichtung des Kettengliedes bilden. Die Vorsprünge 37, 38 weisen übereinander angeordnete kugelschalenförmige Ausnehmungen auf, die an die Gestalt des Kugelkopfes 27 angepasst sind. Zum Lösen des Querstegs 24 von den Laschen wird ein Werkzeug in den Werkzeugeingangsbereich 21 eingebracht und ein Drehmoment auf den Quersteg ausgeübt, so dass der Quersteg teilweise aus der Aufnahme 32 herausgedreht wird. Während dieses Vorgangs gelangt der Kugelkopf 27 in die Gelenkpfanne, wie dies aus der Fig. 15 ersichtlich ist. Der Quersteg 24 kann dann entsprechend dem Verschwenkwinkel der Paarung Gelenkpfanne Kugelkopf verschwenkt werden, beispielsweise in eine Position wie sie in der Fig. 16 dargestellt ist.

### Bezugszeichenliste

- 1.: Kettenglied
- 2.: Laschen
- 3.: Lasche
- 4.: Quersteg
- 5.: Gelenkbolzen
- 6.: Gelenkaufnahme
- 7.: Kugelkopf
- 8.: Spalten
- 9.: Längsrand
- 10.: Längsrand
- 11.: Werkzeugeingriffsbereich
- 12.: Schlitz
- 13.: Längsrand
- 14.: Ausnehmung
- 15.: Boden
- 16.: Seitenwand
- 17.: Vorsprung
- 18.: Zunge
- 19.: Kalotte
- 20.: Werkzeug
- 21.: Kettenglied
- 22.: Laschen
- 23.: Lasche
- 24.: Quersteg
- 25.: Gelenkbolzen
- 26.: Gelenkaufnahme
- 27.: Kugelkopf
- 28.: Spalt
- 29.: Fortsatz
- 30.: Längsrand
- 31.: Werkzeugeingriffsbereich
- 32.: Aufnahme
- 33.: Seitenwand
- 34.: Bodenwand
- 35.: Erhebung
- 36.: Gelenkpfanne
- 37.: Vorsprung
- 38.: Vorsprung

## Patentansprüche

1. Kettenglied für eine Energieführungskette zum Führen von Leitungen, Schläuchen oder dgl. zwischen einem ortsfesten und einem beweglichen Anschlusspunkt, wobei das Kettenglied (1, 21) wenigstens eine Gelenkverbindung, wenigstens einen Quersteg (4, 24) und zwei beabstandet zueinander angeordnete Laschen (2, 3, 22, 23) aufweist, wobei der Quersteg (4, 24) mit wenigstens einer Lasche (2, 3, 22, 23) durch die Gelenkverbindung gelenkig verbunden ist, **dadurch gekennzeichnet, dass** die Gelenkverbindung jeweils genau eine mehrachsige Kugelgelenkverbindung aufweist, wobei der wenigstens eine Quersteg (4, 24) wenigstens einen Kugelkopf (7, 27) und die wenigstens eine Lasche (2, 3, 22, 23) wenigstens eine korrespondierende Gelenkpfanne (36) aufweisen und/oder die wenigstens eine Lasche (2, 3, 22, 23) wenigstens einen Kugelkopf (7, 27) und der wenigstens eine Quersteg (4, 24) wenigstens eine korrespondierende Gelenkpfanne (36) aufweisen, wobei der Kugelkopf (7) oder/und die Gelenkpfanne an wenigstens einem Endbereich des Querstegs (4) ausgebildet ist bzw. sind.

2. Kettenglied nach Anspruch 1, **dadurch gekennzeichnet, dass** an den gegenüberliegenden Endbereichen des Querstegs (4) jeweils ein Kugelkopf (7) und/oder eine Gelenkpfanne vorgesehen sind, die auf einer gedachten Gerade liegen, welche im wesentlichen parallel zur Längsachse ist.

3. Kettenglied nach Anspruch 1 oder 2, **dadurch gekennzeichnet, dass** an den gegenüberliegenden Endbereichen des Querstegs (4) jeweils ein Kugelkopf (7) und/oder eine Gelenkpfanne vorgesehen sind, die auf einer gedachten Geraden liegen, welche eine Längsachse unter einem Winkel schneidet.

4. Kettenglied nach wenigstens einem der vorhergehenden Ansprüche 1 bis 3, **dadurch gekennzeichnet, dass** die Lasche (2, 3, 22, 23) ein Aufnahme aufweist, welche teilweise einen Randbereich des Querstegs (4, 27) umgreift.

5. Kettenglied nach einem oder mehreren Ansprüchen 1 bis 4, **dadurch gekennzeichnet, dass** die Lasche (2, 3, 22, 23) eine Aufnahme aufweist, in der eine Gelenkpfanne (36) oder/und ein Kugelkopf (7, 27) ausgebildet ist bzw. sind.

6. Kettenglied nach wenigstens einem der vorhergehenden Ansprüche 1 bis 5, **dadurch gekennzeichnet, dass** wenigstens eine Lasche (2, 3, 22, 23) wenigstens teilweise aus einem Kunststoff ausgebildet ist.

7. Kettenglied nach wenigstens einem der vorhergehenden Ansprüche 1 bis 6, **dadurch gekennzeichnet, dass** der Quersteg (4, 24) einen Deckel bildet.

## Claims

1. Chain link for an energy guide chain for guiding cables, hoses or similar between a fixed and a moving connecting point, with the chain link (1, 21) having at least one swivel joint, at least one cross piece (4, 24) and two side plates (2, 3, 22, 23) arranged spaced apart from each other, with the cross piece (4, 24) being connected by a swivel joint to at least one side plate (2, 3, 22, 23), **characterized in that** in each case the swivel joint precisely has one multi-axis swivel ball joint with the at least one cross piece (4, 24) having at least one ball head (7,27) and the at least one side plate (2, 3,22,23) has at least one corresponding swivel socket (36) and/or the at least one side plate (2, 3, 22, 23) has at least one ball head (7,27) and the at least one cross piece (4, 24) has at least one corresponding swivel socket (36) with the ball head (7) and/or the swivel socket being formed on at least one end area of the cross piece (4).

2. Chain link according to Claim 1, **characterized in that** a ball head (7) and/or a swivel socket, that lie on an imaginary straight line that is essentially parallel to the longitudinal axis, are provided on each of the opposite end areas of the cross piece (4).

3. Chain link according to Claim 1 or 2, **characterized in that** a ball head (7) and/or a swivel socket are provided on each of the opposite end areas of the cross piece (4) that lie on an imaginary straight line that intersects a longitudinal axis at an angle.

4. Chain link according to at least one of the preceding Claims 1 to 3 **characterized in that** the side plate (2, 3, 22, 23) has a support that partially grips around an edge area of the cross piece (4, 27).

5. Chain link according to one or more of Claims 1 to 4, **characterized in that** the side plate (2, 3, 22, 23) has a support in which a swivel socket (36) and/or a ball head (7, 27) is/are formed.

6. Chain link according to at least one of the preceding Claims 1 to 5, **characterized in that** at least one side plate (2, 3, 22, 23) is at least partially formed from a plastic.

7. Chain link according to at least one of the preceding Claims 1 to 6, **characterized in that** the cross piece (4, 24) forms a cover.

## Revendications

1. Maillon de chaîne pour une chaîne de conduction d'énergie pour conduire des lignes, des tuyaux ou similaires entre un point de raccordement fixe et un point de raccordement mobile, le maillon de chaîne (1, 21) présentant au moins une liaison articulée, au moins une nervure transversale (4, 24) et deux éclisses (2, 3, 22, 23) disposées à distance l'une de l'autre, la nervure transversale (4, 24) étant connectée de manière articulée à au moins une éclisse (2, 3, 22, 23) par la liaison articulée, **caractérisé en ce que** la liaison articulée présente à chaque fois exactement une liaison à rotule à plusieurs axes, l'au moins une nervure transversale (4, 24) présentant au moins une tête de rotule (7, 27) et l'au moins une éclisse (2, 3, 22, 23) présentant au moins une cavité articulaire correspondante (36) et/ou l'au moins une éclisse (2, 3, 22, 23) présentant au moins une tête de rotule (7, 27) et l'au moins une nervure transversale (4, 24) présentant au moins une cavité articulaire correspondante (36), la tête de rotule (7) et/ou la cavité articulaire étant réalisée(s) sur au moins une région d'extrémité de la nervure transversale (4).

2. Maillon de chaîne selon la revendication 1, **caractérisé en ce qu'**une tête de rotule (7) et/ou une cavité articulaire sont prévues à chaque fois au niveau des régions d'extrémité opposées de la nervure transversale (4) et se situent sur une ligne droite imaginaire qui est essentiellement parallèle à l'axe longitudinal.

3. Maillon de chaîne selon la revendication 1 ou 2, **caractérisé en ce qu'**une tête de rotule (7) et/ou une cavité articulaire sont prévues à chaque fois au niveau des régions d'extrémité opposées de la nervure transversale (4) et se situent sur une ligne droite imaginaire qui coupe un axe longitudinal suivant un certain angle.

4. Maillon de chaîne selon au moins l'une quelconque des revendications précédentes 1 à 3, **caractérisé en ce que** l'éclisse (2, 3, 22, 23) présente un logement qui vient en prise en partie autour d'une région de bord de la nervure transversale (4, 27).

5. Maillon de chaîne selon l'une ou plusieurs des revendications précédentes 1 à 4, **caractérisé en ce que** l'éclisse (2, 3, 22, 23) présente un logement dans lequel est ou sont réalisée(s) une cavité articulaire (36) et/ou une tête de rotule (7, 27).

6. Maillon de chaîne selon au moins l'une quelconque des revendications précédentes 1 à 5, **caractérisé en ce qu'**au moins une éclisse (2, 3, 22, 23) est réalisée au moins en partie en matière plastique.

7. Maillon de chaîne selon au moins l'une quelconque des revendications précédentes 1 à 6, **caractérisé en ce que** la nervure transversale (4, 24) forme un couvercle.
